**Europäisches Patentamt**

**European Patent Office**

**Office européen des brevets**

(19)

(11)  **EP 0 695 630 B1**

(12)  **EUROPÄISCHE PATENTSCHRIFT**

(45) Veröffentlichungstag und Bekanntmachung des Hinweises auf die Patenterteilung:
    **24.10.2001   Patentblatt 2001/43**

(51) Int Cl.$^7$: **B32B 27/32**

(21) Anmeldenummer: **95109718.7**

(22) Anmeldetag: **22.06.1995**

(54) **Niedrig siegelnde, biaxial orientierte Polyolefin-Mehschichtfolie, Verfahren zu ihrer Herstellung und ihre Verwendung**

Biaxially orientated polyolefin laminate with low sealing-temperature, method of making it and its use

Feuille stratifiée en polyoléfine orientée biaxialement, scellable à basse température, procédé pour sa fabrication et son application

(84) Benannte Vertragsstaaten:
    **BE DE ES FR GB IT NL**

(30) Priorität: **05.08.1994  DE 4427862**

(43) Veröffentlichungstag der Anmeldung:
    **07.02.1996   Patentblatt 1996/06**

(73) Patentinhaber: **Trespaphan GmbH**
    **66539 Neunkirchen (DE)**

(72) Erfinder:
 • **Schreck, Michael**
   **D-60529 Frankfurt (DE)**
 • **Schlögl, Gunter**
   **D-65779 Kelkheim (DE)**
 • **Thören, Klaus**
   **D-65203 Wiesbaden (DE)**
 • **Wilhelm, Adolf**
   **D-65199 Wiesbaden (DE)**

(74) Vertreter: **Luderschmidt, Schüler & Partner GbR**
    **Patentanwälte,**
    **Postfach 3929**
    **65029 Wiesbaden (DE)**

(56) Entgegenhaltungen:
  **EP-A- 0 246 369      EP-A- 0 578 149**
  **EP-A- 0 611 647      GB-A- 1 452 424**
  **GB-A- 1 582 186      US-A- 4 294 889**
  **US-A- 4 339 495**

**Beschreibung**

Die Erfindung betrifft eine polyolefinische Mehrschichtfolie, umfassend eine Basisschicht, welche Polypropylen enthält, und mindestens eine Deckschicht. Die Erfindung betrifft ferner die Verwendung dieser Folie für Einschlagsverpackungen mit mindestens drei übereinanderliegenden Folienlagen an den Stirnseiten.

Die immer schneller laufenden Verpackungsmaschinen erfordern ebenso wie empfindliche Füllgüter (Lebensmittel, Schokolade, Gebäck) Folien mit einer niedrigen Siegelanspringtemperatur in Kombination mit einem optimalen Maschinenlaufverhalten. Im Stand der Technik sind Folien bekannt, welche Siegelanspringtemperaturen um 100 °C, teilweise sogar bis hinunter zu 74 °C, aufweisen. Diese Folien besitzen jedoch schwerwiegende Nachteile in der Herstellung bzw. bei ihrer Verwendung.

EP-A-0 114 312 und EP-A-0 114 311 beschreiben transparente bzw. opake Polypropylenfolien mit einer Siegelanspringtemperatur von unter 100 °C und mit guter Maschinengängigkeit. Diese Folien weisen eine Deckschicht aus einer Mischung aus $C_2/C_3/C_4$-Terpolymer und $C_3/C_4$-Copolymer sowie ein niedrigmolekulares Harz, Polypropylenhomopolymer und Polydiorganosiloxan auf. Nach dieser Lehre wird der große Siegelbereich der Folie und die niedrige Siegelanspringtemperatur durch die Olefinharzzusammensetzung aus Co- und Terpolymer erzielt. Die minimale Siegelanspringtemperatur beträgt 90 °C. Die Einarbeitung von Kohlenwasserstoffharzen in die Deckschicht führt zu Harzablagerungen an den Streckwalzen bei der Herstellung. Durch diese Ablagerungen kommt es zur Streifenbildung. Die Walzen müssen häufig gereinigt werden.

Die EP-A-0 480 282 beschreibt eine beidseitig niedrig siegelnde biaxial orientierte Polyolefin-Mehrschichtfolie, deren Basisschicht ein peroxidisch abgebautes Propylenhomopolymerisat enthält und deren Deckschichten Mischungen aus $C_2/C_3/C_4$-Terpolymer und $C_2/C_3$-Copolymer sowie eine Kombination von $SiO_2$ und Polydialkylsiloxan enthalten. Das Polydialkylsiloxan ist hochviskos und wird in Form eines Masterbatches zugegeben. Die Siegelanspringtemperatur beträgt 88 °C.

Die noch nicht veröffentlichte europäische Patentanmeldung Nr. 94101786.5 beschreibt Mehrschichtfolien mit mindestens einer niedrig siegelnden Deckschicht. Die Deckschicht enthält eine niedrig kristalline $C_3/C_4$-Olefinharzzusammensetzung und weist eine Siegelanspringtemperatur von kleiner 84 °C auf. Folien mit dieser Deckschicht neigen bei der Herstellung zu starkem Verkleben mit sich selbst und mit heißen Maschinenteilen wie z. B. Streckwalzen. Ferner neigen die daraus hergestellten Verpackungen, insbesondere bei Lagerung in der Sonne bei sommerlichen Temperaturen wie z. B. in einem Zigarettenautomaten, leicht zur Verblockung und sind daher für diese Verwendung ungeeignet.

Des weiteren sind im Stand der Technik siegelfähige Deckschichten aus $C_2/C_3$-Copolymeren sowie aus $C_2/C_3/C_4$-Terpolymeren bekannt. Diese Folien haben alle Siegelanspringtemperaturen von über 100 °C.

Bekannt sind ferner Zigarettenverpackungen, die bevorzugt aus mehrschichtigen Opakfolien bestehen wie in EP-A-0 582 953 beschrieben. Hier werden als Deckschichtmaterialien übliche Propylenpolymere sowie Mischungen daraus beschrieben. Diese nach dem Stand der Technik eingesetzten Deckschichtrohstoffe weisen die oben beschriebenen Nachteile der hohen Siegelanspringtemperatur, der Walzenablagerungen oder der Verklebeneigung auf und müssen optimiert werden. Weiterhin hat sich gezeigt, daß die Siegelnaht der Folie an den Stirnseiten der Zigarettenverpackung mangelhaft ist. Insbesondere diejenigen Stellen der Siegelnaht, welche aus mehr als drei übereinanderliegenden Folienlagen gebildet werden, sind besonders kritisch, da die notwendige Wärme nicht in der zur Verfügung stehenden Siegelzeit durch alle diese Lagen hindurchgeht.

Der Erfindung liegt die Aufgabe zugrunde, eine Mehrschichtfolie zur Verfügung zu stellen, welche gute Siegeleigenschaften besitzt und auch bei mehrlagigen Siegelnähten problemlos mit hoher Taktgeschwindigkeit gesiegelt werden kann, um auch für wärmeempfindliche Verpackungsgüter und auf schnellaufenden Verpackungsmaschinen einsetzbar zu sein. Die Folie soll unter den üblichen Lagerbedingungen nicht zum Verblocken neigen. Ferner soll die Folie bei der Herstellung nicht zu Ablagerungen, z. B. auf Streckwalzen, führen. Für transparente Ausführungsformen der Folie ist eine geringe Trübung gefordert. In einer bevorzugten Ausführungsform soll die niedrig siegelnde Seite bedruckbar sein.

Erfindungsgemäß wird diese Aufgabe gelöst durch eine Folie der eingangs genannten Gattung, deren kennzeichnende Merkmale darin bestehen, daß die Deckschicht mindestens 50 Gew.-% einer niedrig kristallinen $C_3/C_4$-Olefinharzzusammensetzung enthält, welche durch eine Coronabehandlung und/oder durch den Zusatz eines Propylenpolymeren modifiziert ist, und die Deckschicht eine Siegelanspringtemperatur von 85 bis 110 °C aufweist.

Je nach ihrem vorgesehenen Einsatzgebiet kann die jeweilige Ausführungsform der Folie transparent, matt, opak, weiß oder weiß-opak sein.

Die erfindungsgemäße Folie umfaßt mindestens eine Kernschicht und die erfindungswesentliche Deckschicht, wobei die Kernschicht im wesentlichen ein Propylenpolymer oder eine Polypropylenmischung enthält.

Das Propylenpolymere enthält zum überwiegenden Teil (mindestens 90 %) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger stellen bevorzugte Propylenpolymere für die Kernschicht dar, wobei isotaktisches Homopolypropylen besonders bevorzugt ist. Die angegebenen Gewichtsprozente beziehen sich auf das jeweilige Copolymer. Das Propylenpolymere der Kernschicht hat im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Des weiteren ist eine Mischung aus den genannten Propylenhomo- und/oder -copolymeren und/oder anderen Polyolefinen, insbesondere mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

Gegebenenfalls kann das in der Kernschicht eingesetzte Polypropylenpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1 =$     Schmelzflußindex des Polypropylenpolymeren vor dem Zusatz des organischen Peroxids

$MFI_2 =$     Schmelzflußindex des peroxidisch abgebauten Polypropylenpolymeren

Im allgemeinen liegt der Abbaufaktor A des eingesetzten Polypropylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Opake, weiße oder weiß-opake Ausführungsformen der Folien enthalten in der Kernschicht und/oder in weiteren Schichten zusätzlich Füllstoffe in einer Menge von 5 bis 20 Gew.-%, bezogen auf das Gesamtgewicht der Folie.

Bei den Füllstoffen der Basisschicht handelt es sich um die üblichen anorganischen und/oder organischen, mit Polypropylen unverträglichen Materialien. Anorganische Füllstoffe sind bevorzugt, insbesondere geeignet sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat (Kreide) ist besonders bevorzugt. Als organische Füllstoffe kommen die üblicherweise verwendeten, mit dem Polymeren der Basisschicht unverträglichen Polymeren in Frage, insbesondere solche wie Polyester, Polystyrole, Polyamide, halogenierte organische Polymere, wobei Polyester wie beispielsweise Polybutylenterephthalate bevorzugt sind. Darüber hinaus sind auch Cycloolefinpolymere als Füllstoffe besonders geeignet. Die Füllstoffmenge der Basisschicht, insbesondere die des $CaCO_3$, beträgt erfindungsgemäß 1 bis 20 Gew.-%, vorzugsweise 3 bis 15 Gew.-%, bezogen auf das Gesamtgewicht der Folie. Die mittlere Teilchengröße der Füllstoffe, insbesondere die des $CaCO_3$, liegt im Bereich von 1 bis 5 µm, vorzugsweise im Bereich von 1,5 bis 4 µm.

Schon mit einem relativ geringen Füllstoffgehalt von 3 bis 13 Gew.-% wird eine Dichte der opaken Ausführungsformen von kleiner 0,8 g/cm$^3$ erzielt. Im allgemeinen liegt die Dichte der erfindungsgemäßen opaken Folie im wünschenswerten Bereich von 0,4 bis 0,75 g/cm$^3$.

Neben dem bevorzugten Calciumcarbonat ist als weiteres Kernschichtadditiv, wenn vorhanden, Titandioxid geeignet, welches gegebenenfalls in Kombination mit $CaCO_3$ in der Basisschicht eingesetzt wird. In bevorzugter Ausführungsform bestehen die Titandioxidteilchen zu mindestens 95 Gew.-% aus Rutil. Die Titandioxidteilchen werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, bezogen auf 100 g $TiO_2$-Teilchen, enthalten. Der Überzug wird auf die Teilchen in wäßriger Suspension aufgebracht. Als besonders vorteilhaft hat es sich erwiesen, wenn die $TiO_2$-Teilchen mit $Al_2O_3$ oder mit $Al_2O_3$ und Polydimethylsiloxan beschichtet sind.

Der Anteil an Titandioxid in der Kernschicht - sofern vorhanden - beträgt 1 bis 9 Gew.-%, bevorzugt 3 bis 5 Gew.-%, bezogen auf das Gesamtgewicht der Folie. Die mittlere Teilchengröße ist sehr klein und liegt vorzugsweise bei 0,15 bis 0,40 µm, wobei sich die angegebene Teilchengröße auf die beschichteten Teilchen bezieht.

$TiO_2$ findet dann bevorzugt zusätzlich zu $CaCO_3$ Verwendung in der Basisschicht, wenn ein weiß-opakes Aussehen der Folie gewünscht ist. Üblicherweise zeigen Folien mit einer nur füllstoffhaltigen Basisschicht ein trübes, sogenanntes opakes Aussehen, welches durch Streuprozesse an den Vakuolen der Basisschicht entsteht. Davon zu unterscheiden ist ein weißes Aussehen, welches durch Einfärbungen durch Pigmente, vorzugsweise $TiO_2$, erzielt wird.

Weiterhin kann die Kernschicht gegebenenfalls ein niedermolekulares Harz enthalten, dessen Anteil 1 bis 30 Gew.-%, vorzugsweise 2 bis 10 Gew.-%, beträgt. Der Erweichungspunkt des Harzes liegt zwischen 130 und 180 °C (gemessen nach DIN 1995-U4, entspricht ASTM E-28), vorzugsweise zwischen 140 und 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Des weiteren ist es bevorzugt, der Basisschicht Antistatika wie beispielsweise tertiäre aliphatische Amine oder Glycerinmonostearat zuzusetzen. Art und Menge der Antistatika werden nachstehend im einzelnen beschrieben.

Die erfindungsgemäße Mehrschichtfolie umfaßt neben der Kernschicht mindestens eine niedrig siegelnde Deckschicht, welche eine niedrig kristalline $C_3/C_4$-Olefinharzzusammensetzung enthält. Im allgemeinen enthält die Deckschicht mindestens 50 Gew.-%, vorzugsweise 60 bis 100 Gew.-%, insbesondere 70 bis 95 Gew.-%, jeweils bezogen auf das Gewicht der Deckschicht, der Olefinharzzusammensetzung. Es ist erfindungswesentlich, daß diese Deckschicht durch geeignete Maßnahmen so modifiziert wird, daß die Siegelanspringtemperatur im Bereich von 85 bis 110 °C liegt. Die $C_3/C_4$-Olefinharzzusammensetzung hat ohne diese Maßnahmen, d. h. in Reinform, eine Siegelanspringtemperatur von unter 84 °C. Es wurde gefunden, daß durch eine Corona- oder Flammbehandlung der $C_3/C_4$-olefinharzhaltigen Deckschicht die Siegelanspringtemperatur auf einen Bereich von 85 bis 110 °C erhöht wird und dabei gleichzeitig auch andere Eigenschaften der Folie überraschend verbessert werden. Alternativ zur Coronabe-handlung kann die $C_3/C_4$-Olefinharzzusammensetzung auch durch Abmischen mit anderen Propylenpolymeren modifiziert werden, wobei diese Abmischung ebenfalls die Siegelanspringtemperatur auf 85 bis 110 °C erhöhen muß. Die niedrig kristalline $C_3/C_4$-Olefinharzzusammensetzung kann durch die folgenden Angaben charakterisiert werden:

| Schmelztemperatur: | <130 °C, vorzugsweise 105 bis 120 °C |
|---|---|
| Rekristallisationstemperatur: | <80 °C, vorzugsweise 55 bis 80 °C |
| Schmelzenthalpie: | <67 J/g, vorzugsweise 50 bis 60 J/g |
| $C_3$ -Gehalt: | 60 bis 85 Gew.-%, vorzugsweise 70 bis 80 Gew.-%, jeweils bezogen auf das Gewicht des Copolymeren, bzw. 60 bis 85 Mol-%, vorzugsweise 70 bis 80 Mol-%, jeweils bezogen auf das Copolymere |
| $C_4$ -Gehalt: | 15 bis 40 Gew.-%, vorzugsweise 20 bis 30 Gew.-%, jeweils bezogen auf das Gewicht des Copolymeren, bzw. 15 bis 40 Mol-%, vorzugsweise 20 bis 30 Mol-%, jeweils bezogen auf das Copolymere |

Insbesondere ist eine Olefinharzzusammensetzung bevorzugt, deren Schmelztemperatur 110,6 °C, deren Rekristallisationstemperatur 60 °C und deren Schmelzenthalpie 56,7 J/g beträgt. Die Siegelanspringtemperatur einer Deckschicht aus dieser Reinkomponente liegt im Bereich von 65 bis 80 °C.

Die Deckschicht enthält die zur Modifizierung geeigneten Propylenpolymeren in einer Menge von maximal 50 Gew.-%, vorzugsweise mehr als 0 bis 40 Gew.-%, insbesondere 5 bis 30 Gew.-%, jeweils bezogen auf das Gewicht der Deckschicht. Als Propylenpolymere sind die folgenden Polymeren zur Modifizierung besonders geeignet:

  Propylenhomopolymer oder
  Copolymer von
   Ethylen und Propylen oder
   Ethylen und Butylen-1 oder
   Propylen und Butylen-1 oder
  Terpolymer von
   Ethylen und Propylen und Butylen-1 oder

eine Mischung aus zwei oder mehreren der genannten Homo-, Co- und Terpolymeren oder

ein Blend aus zwei oder mehreren der genannten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und

einem Butylen-1-Gehalt von 2 bis 20 Gew.-%, bevorzugt 4 bis 20 Gew.-%,

jeweils bezogen auf das Gesamtgewicht des Terpolymeren, oder ein Blend aus einem Ethylen-Propylen-Butylen-1-Terpolymeren und einem Propylen-Butylen-1-Copolymeren

mit einem Ethylengehalt von 0,1 bis 7 Gew.-%

und einem Propylengehalt von 50 bis 90 Gew.-%

und einem Butylen-1-Gehalt von 10 bis 40 Gew.-%,

jeweils bezogen auf das Gesamtgewicht des Polymerblends, bevorzugt sind.

Besonders bevorzugt zur Modifizierung sind Polymere wie ® Tafmer XR 107L von der Firma Mitsui und ® PKS 309 von der Firma Solvay.

Gegebenenfalls kann die durch Abmischen modifizierte Deckschicht auch noch zusätzlich corona- oder flammbehandelt werden.

In einer bevorzugten Ausführungsform enthält die erfindungsgemäße Deckschicht ein Antiblockmittel. Art und Menge der Antiblockmittel werden nachstehend beschrieben.

Die Mehrschichtfolie ist mindestens zweischichtig und umfaßt als wesentliche Schichten immer die Kernschicht und mindestens eine erfindungsgemäße Deckschicht. Je nach ihrem vorgesehenen Verwendungszweck kann die Folie eine weitere Deckschicht und/oder weitere Zwischenschichten aufweisen. Beidseitige Deckschichten können nach ihrem Aufbau, ihrer Zusammensetzung und ihrer Dicke grundsätzlich gleich oder verschieden sein, d. h. die zweite Deckschicht kann sowohl die gleiche modifizierte, niedrig kristalline Olefinharzzusammensetzung wie vorstehend beschrieben oder andere bekannte siegelfähige Propylenpolymere wie beispielsweise $C_2/C_3$-Copolymere, $C_2/C_3/C_4$-Terpolymere oder Mischungen daraus oder nicht siegelfähige Homopolymere enthalten. Bevorzugt ist eine Ausführungsform, bei der die zweite Deckschicht nicht bedruckbar ist und eine minimale Siegelanspringtemperatur besitzt, die über der der erfindungsgemäßen Deckschicht liegt.

Des weiteren kann die erfindungsgemäße Mehrschichtfolie ein- und/oder beidseitig Zwischenschichten aufweisen. Zwischenschichten sind insbesondere für opake Ausführungsformen bevorzugt und enthalten dann bevorzugt vorstehend beschriebenes $TiO_2$ als Additiv.

Die Dicke der erfindungsgemäßen niedrig siegelnden, modifizierten Deckschicht ist größer 0,3 µm und beträgt im allgemeinen 0,4 bis 5 µm. Bevorzugt liegt die Deckschichtdicke im Bereich von 0,6 bis 3 µm, insbesondere im Bereich von 0,8 bis 1,5 µm. Die Gesamtdicke der Folie richtet sich nach ihrem beabsichtigten Verwendungszweck und kann innerhalb weiter Grenzen variieren. Im allgemeinen liegt die Gesamtdicke im Bereich von 5 bis 150 µm, vorzugsweise im Bereich von 10 bis 100 µm, insbesondere im Bereich von 15 bis 70 µm. Opake Ausführungsformen liegen im Bereich von 5 bis 150 µm, vorzugsweise im Bereich von 40 bis 100 µm, insbesondere im Bereich von 60 bis 90 µm.

Um bestimmte Eigenschaften der erfindungsgemäßen Polypropylenfolie noch weiter zu verbessern, können die Kernschicht und die Deckschicht/en weitere Zusätze, welche die wesentlichen Folieneigenschaften nicht beeinträchtigen, in einer jeweils wirksamen Menge enthalten, vorzugsweise Gleitmittel und/oder Stabilisatoren und/oder Neutralisationsmittel, die mit den Polymeren der Kernschicht und der Deckschicht/en verträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Der Zusatz von Polydimethylsiloxanen ist im Bereich von 0,05 bis 2,0 Gew.-%, insbesondere im Bereich von 0,07 bis 0,2 Gew.-%, bevorzugt, insbesondere Polydimethylsiloxane mit einer Viskosität von 10 000 bis 1 000 000 mm²/s.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m$^2$/g.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 120 bis 170 °C, vorzugsweise 140 bis 160 °C, gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Darüber hinaus wird die Längsstreckung vorteilhafterweise bei einer Temperatur von weniger als 150 °C, vorzugsweise im Bereich von 110 bis 140 °C, und die Querstreckung bei einer Temperatur größer 140 °C, vorzugsweise bei 145 bis 180 ° C, durchgeführt. Die Folie wird auf die notwendige Strecktemperatur mittels eines Luftheizkastens gebracht.

Nach der biaxialen Streckung wird die Folie zur Modifizierung der C$_3$/C$_4$-harzhaltigen Deckschicht auf dieser Oberfläche corona- oder flammbehandelt. Wenn die Deckschicht durch Abmischen mit anderen Propylenpolymeren modifiziert wird, kann gegebenenfalls auf die entsprechende Behandlung verzichtet werden.

Bei der Coronabehandlung wird so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Bei der Flammbehandlung wird die Folie über eine Kühlwalze geführt, oberhalb derer ein Gasbrenner angeordnet ist. Die Folie wird durch eine Nipwalze satt auf die Kühlwalze gepreßt. Das aus dem Brenner ausströmende Gas wird entzündet und bildet etwa 5 bis 10 mm große Flammen. Der oxydierende Teil der Flamme trifft dabei auf der Folienoberfläche auf und sorgt für eine Erhöhung der Oberflächenenergie der Folie. Sie liegt auch hier im üblichen Rahmen.

Die erfindungsgemäße Folie zeichnet sich durch eine niedrige Siegelanspringtemperatur im Bereich von 85 bis 110 °C, vorzugsweise 85 bis 95 °C, aus, wobei eine gute Siegelnahtfestigkeit überraschenderweise auch bei Siegelung von bzw. durch mehrere Lagen der Folie erzielt wird. Die erfindungsgemäße Folie ist daher besonders für den Zigaretteneinschlag auf schnellaufenden Verpackungsmaschinen geeignet.

Kennzeichnend für diese Art der Verpackung ist der Einschlag an den Stirnseiten der Packung. An diesen Stellen kommen bedingt durch die mehrfache Faltung mindestens drei oder auch fünf Lagen der Folie aufeinander zu liegen. Bei der Siegelung an diesen Stirnseiten muß die zur Siegelung notwendige Wärme in hinreichend kurzer Zeit diese Folienlagen durchdringen. Überraschenderweise läßt sich die erfindungsgemäße Folie mit der modifizierten Deckschicht hervorragend für diese Anwendung einsetzen. Dies ist insbesondere bei den opaken Ausführungsformen der Folie überraschend, welche durch ihre hohe Dicke und durch ihre vakuolenhaltige Struktur besonders gute Wärmeisolationseigenschaften hat.

Darüber hinaus zeichnet sich die modifizierte Deckschicht durch gute Warmblockwerte aus. Die Folie läßt sich problemlos herstellen und verarbeiten. Sie neigt nicht zum Verkleben auf den Walzen, und sie verklebt auch bei hohen Temperaturen nicht mit sich selbst.

Die niedrige Siegelanspringtemperatur eröffnet jedoch auch neue Anwendungsbereiche, z. B. als Etikettenfolie ohne zusätzlichen Haftvermittler.

Die Erfindung wird durch die nachfolgenden Beispiele näher erläutert:

**Beispiel 1**

Es wurde durch Coextrusion und anschließende stufenweise Orientierung in Längs- und Querrichtung eine dreischichtige opake Folie mit einer Gesamtdicke von 60 μm, einer Dichte von 0,75 g/cm$^3$ und einem ABC-Schichtaufbau hergestellt, d. h. die Basisschicht B ist von einer Deckschicht A und einer Deckschicht C umgeben. Vor der Aufrollung wurde die Folie auf der A-Seite coronabehandelt. Die Oberflächenspannung betrug auf dieser Seite infolge der Coronabehandlung 39 bis 40 mN/m.

Alle Schichten enthielten zur Stabilisierung 0,12 Gew.-% Pentaerythrithyl-Tetrakis-4-(3,5-ditertiärbutyl-4-hydroxyphenyl)-propionat (® Irganox 1010) und als Neutralisationsmittel 0,06 Gew.-% Calciumstearat.

Die Basisschicht B bestand im wesentlichen aus einem Polypropylenhomopolymeren mit einem n-heptanlöslichen Anteil von 3,5 Gew.-% und einem Schmelzpunkt von 162 °C. Der Schmelzflußindex des Polypropylenhomopolymeren betrug 3,4 g/10 min bei 230 °C und 21,6 N Belastung (DIN 53 735). Die Basisschicht enthielt ferner 4,3 Gew.-% des Kreidemasterbatches ® MP 52355 der Firma Multibase und 4 Gew.-% des TiO$_2$-Batches ® P 8555 der Firma Schulman.

Die polyolefinische Deckschicht A bestand im wesentlichen aus einer Mischung von 90 Gew.-% aus einem statistischen Propylen-Buten-1-Copolymerisat (® Tafmer XR 110 T) mit einem Propylengehalt von 74,3 Mol-%, einem Buten-1-Gehalt von 25,7 Mol-%, bezogen auf das Copolymere, einer Schmelztemperatur von 110,6 °C und einer Rekristallisationstemperatur von 60 °C sowie zu 10 Gew.-% aus Ethylen-Propylen-Buten-Terpolymer ® Tafmer XR 107. Die Deckschicht A enthielt 0,35 Gew.-% des Antiblockmittels Siliciumdioxid mit einem mittleren Teilchendurchmesser von 4 μm. Die Deckschichtdicke betrug 0,8 μm.

Die polyolefinische Deckschicht C bestand im wesentlichen aus Ethylen-Propylen-Buten-1-Terpolymeren mit einem Gehalt von 3,5 Gew.-% Ethylen, 88,5 Gew.-% Propylen und 8 Gew.-% Buten-1. Das Terpolymere enthielt 0,30 Gew.-% Siliciumdioxid mit einem mittleren Teilchendurchmesser von 4 μm. Die Dicke der Deckschicht betrug 0,8 μm.

**Beispiel 2**

Beispiel 1 wurde wiederholt. Die polyolefinische Deckschicht A, die coronabehandelt wurde, bestand zu 60 Gew.-% aus einem statistischen Propylen-Buten-1-Copolymerisat mit einem Gehalt von 74,3 Mol-% Propylen und 25,7 Mol-% Buten-1 sowie zu 40 Gew.-% aus ® Tafmer XR 107. Das Copolymere enthielt 0,35 Gew.-% eines Siliciumdioxids mit einem mittleren Teilchendurchmesser von 4 μ m. Die Dicke der Deckschicht betrug 0,9 μm.

**Vergleichsbeispiel 1**

Beispiel 1 wurde wiederholt. Die polyolefinische Deckschicht A bestand im wesentlichen aus einem Propylen-Buten-1-Copolymeren mit einem Gehalt von 74,3 Mol-% Propylen und 25,7 Mol-% Buten-1. Die Deckschicht enthielt 0,35 Gew.-% des Antiblockmittels Siliciumdioxid mit einem mittleren Teilchendurchmesser von 4 μm. Die Deckschichtdicke betrug 0,8 μm.

Die Eigenschaften der Folien gemäß den Beispielen und Vergleichsbeispielen sind in der nachstehenden Tabelle zusammengestellt.

Zur Charakterisierung der Rohstoffe und der Folien wurden die folgenden Meßmethoden benutzt:

Schmelzflußindex (MFI)

DIN 53 735 bei 21,6 N Belastung und 230 °C.

Schmelzpunkt

DSC-Messung, Maximum der Schmelzkurve, Aufheizgeschwindigkeit 20 °C/min.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Siegelnahtfestigkeit bei 100 °C

Zur Bestimmung wurden zwei 15 mm breite Folienstreifen übereinandergelegt und bei 100 °C, einer Siegelzeit von 0,5 s und einem Siegeldruck von 10 mm$^2$ (Gerät: Brugger Typ NDS, einseitig beheizte Siegelbacke) versiegelt. Die Siegelnahtfestigkeit wurde nach der T-Peel-Methode bestimmt.

Bestimmung der Siegelanspringtemperatur:

Mit dem Siegelgerät HSG/ET der Fa. Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

Bestimmung des Warmblockverhaltens

Zur Messung des Warmblockverhaltens werden zwei einseitig filzbeklebte Holzklötzchen mit den Abmessungen 72 mm x 41 mm x 13 mm in die zu vermessende Folie eingeschlagen und gesiegelt. Auf die mit den Filzauflagen zueinandergekehrten Holzklötzchen wird ein Gewicht von 200 g plaziert und dieser Aufbau in einen auf 70 °C vortemperierten Wärmeofen gebracht und dort über 2 h belassen. Danach wird für 30 min auf Raumtemperatur (21 °C) abgekühlt, das Gewicht von den Holzklötzchen heruntergenommen und das obere Klötzchen mittels einer mechanischen Apparatur vom unteren Klötzchen heruntergezogen. Die Auswertung erfolgt über 4 Einzelmessungen, über die dann eine maximale Abschubkraft (gemessen in N) festgestellt wird. Die Spezifikation ist erfüllt, wenn keine der Einzelmessungen über 5 N liegt.

## TABELLE

| | Minimale Siegeltemperatur (15 N/cm²; 0,5 s) [°C] | | Siegelnahtfestigkeit (105 °C; 1,5 N/cm²; 0,5 s) [N/15 mm] | | Verblockung D/D-Seite | Oberflächen- spannung [mN/m] |
|---|---|---|---|---|---|---|
| | A/A-Seite | C/C-Seite | A/A-Seite | A/C-Seite | | |
| Beispiel 1 | 89 | 114 | 2,2 | 1,3 | keine | 39-40 |
| Beispiel 2 | 94 | 114 | 2,0 | 1,1 | keine | 39-40 |
| Vergleichsbeispiel 1 | 77 | 114 | 2,3 | 1,5 | verblockt | <32 |

**Patentansprüche**

1. Verwendung einer opaken polyolefinischen Mehrschichtfolie für eine Verpackung mit Einschlag an den Stirnseiten, wobei die Siegelung an diesen Stirnseiten durch mindestens drei Lagen der Folien erfolgt und wobei die Folie eine Basisschicht, welche Polypropylen enthält, und mindestens eine Deckschicht umfaßt und wobei die Deckschicht mindestens 50 Gew.-% einer niedrig kristallinen $C_3/C_4$-Olefinharzzusammensetzung enthält, welche durch eine Corona- oder Flammbehandlung modifiziert ist, und die Deckschicht eine Siegelanspringtemperatur von 85 bis 110 °C aufweist und . die Olefinharzzusammensetzung eine Rekristallisationstemperatur von kleiner 80 °C und eine Schmelzenthalpie von <67 J/g und eine Schmelztemperatur von 105 bis 120 °C, aufweist.

**2.** Verwendung nach Anspruch 1, **dadurch gekennzeichnet, daß** die Siegelanspringtemperatur der Deckschicht im Bereich von 85 bis 95 °C liegt.

**3.** Verwendung nach Anspruch 1 und/oder 2, **dadurch gekennzeichnet, daß** die Olefinharzzusammensetzung eine Rekristallisationstemperatur von 55 bis 70 °C, und eine Schmelzenthalpie von 50 bis 60 J/g, aufweist.

**4.** Verwendung nach einem oder mehreren der Ansprüche 1 bis 3, **dadurch gekennzeichnet, daß** die Olefinharzzusammensetzung einen Propylengehalt von 70 bis 80 Mol-%, vorzugsweise 75 Mol-%, und einen Buten-1-Gehalt von 20 bis 30 Mol-%, vorzugsweise 25 Mol-%, jeweils bezogen auf die Olefinharzzusammensetzung, aufweist.

**5.** Verwendung nach einem oder mehreren der Ansprüche 1 bis 4, **dadurch gekennzeichnet, daß** die Deckschicht zu mindestens 50 Gew.-%, bevorzugt 50 bis 95 Gew.-%, insbesondere 60 bis 90 Gew.-%, jeweils bezogen auf das Gewicht der Deckschicht, der $C_3/C_4$-Olefinharzzusammensetzung enthält.

**Claims**

**1.** Use of an opaque polyolefinic multilayer film for a packaging folded over at its end faces, sealing at those end faces being effected by at least three film layers and the film comprising a base layer, comprising polypropylene, and at least one outer layer, the outer layer comprising at least 50 % by weight of a low-crystallinity $C_3/C_4$-olefin resin composition that has been modified by corona or flame treatment, and the outer layer having a sealing start temperature of from 85 to 110°C, and the olefin resin composition having a recrystallisation temperature of less than 80°C and an enthalpy of melting of < 67 J/g and a melting temperature of from 105 to 120°C.

**2.** Use according to claim 1, **characterised in that** the sealing start temperature of the outer layer is in the range from 85 to 95°C.

**3.** Use according to claim 1 and/or 2, **characterised in that** the olefin resin composition has a recrystallisation temperature of from 55 to 70°C and an enthalpy of melting of from 50 to 60 J/g.

**4.** Use according to one or more of claims 1 to 3, **characterised in that** the olefin resin composition has a propylene content of from 70 to 80 mol%, preferably 75 mol%, and a 1-butene content of from 20 to 30 mol%, preferably 25 mol%, in each case based on the olefin resin composition.

**5.** Use according to one or more of claims 1 to 4, **characterised in that** the outer layer contains at least 50 % by weight, preferably from 50 to 95 % by weight, especially from 60 to 90 % by weight, in each case based on the weight of the outer layer, of the $C_3/C_4$-olefin resin composition.

**Revendications**

**1.** Utilisation d'une feuille multicouche polyoléfinique opaque pour un emballage comprenant une insertion sur ses faces frontales, dans laquelle le thermosoudage sur ces faces frontales a lieu en utilisant au moins trois couches de la feuille et dans laquelle la feuille comprend une couche de base qui contient du polypropylène et au moins une couche de recouvrement, et dans laquelle la couche de recouvrement contient une composition de résine oléfinique en $C_3/C_4$ faiblement cristalline, qui a été soumise à une modification via un traitement par effluves négatives ou à la flamme, et la couche de recouvrement présente une température d'amorçage du thermosoudage de 85 à 110°C et la composition de résine oléfinique présente une température de recristallisation inférieure à 80°C et une enthalpie en fusion < 67 J/g et une température de mise en fusion de 105 à 120°C.

**2.** Utilisation selon la revendication 1, **caractérisé en ce que** la température d'amorçage du thermosoudage de la couche de recouvrement se situe dans le domaine de 85 à 95 °C.

**3.** Utilisation selon les revendications 1 et/ou 2, **caractérisé en ce que** la composition de résine oléfinique présente une température de recristallisation de 55 à 70°C et une enthalpie en fusion de 50 à 60 J/g.

**4.** Utilisation selon une ou plusieurs des revendications 1 à 3, **caractérisé en ce que** la composition de résine oléfinique présente une teneur en propylène de 70 à 80 moles %, de préférence de 75 moles % et une teneur en butène-1 de 20 à 30 moles %, de préférence de 25 moles %, chaque fois rapportés à la composition de résine oléfinique.

**5.** Utilisation selon une ou plusieurs des revendications 1 à 4, **caractérisé en ce que** la couche de recouvrement contient la composition de résine oléfinique en $C_3/C_4$ à concurrence d'au moins 50 % en poids, de préférence de 50 à 95 % en poids, en particulier de 60 à 90 % en poids, chaque fois rapportés au poids de la couche de recouvrement.